# NEUE EUROPÄISCHE PATENTSCHRIFT

(11) **EP 1 848 077 B2**
(45) Veröffentlichungstag und Bekanntmachung des Hinweises auf die Entscheidung über den Einspruch: **15.06.2016**
(45) Hinweis auf die Patenterteilung: 31.07.2013
(21) Anmeldenummer: 07000905.5
(22) Anmeldetag: 17.01.2007
(51) Int. Cl.: H02B 1/28

(54) **Brandschutz für Elektroverteilergehäuse**
Fire protection for electrical distributor
Protection contre le feu pour répartiteur électrique

(30) Priorität: 19.04.2006 DE 102006018188
(43) Veröffentlichungstag der Anmeldung: 24.10.2007
(73) Patentinhaber: Eaton Safety IP GmbH & Co. KG, 12529 Schönefeld (DE)
(72) Erfinder: Villis, Heinz-Günter, 59505 Bad Sassendorf (DE); Fußel, Martin, 59494 Soest (DE)
(74) Vertreter: Grünecker Patent- und Rechtsanwälte PartG mbB

(56) Entgegenhaltungen:
- DE-A1- 4 207 509
- DE-A1- 10 023 337
- DE-A1- 10 039 151
- DE-A1- 19 720 842
- DE-C1- 10 158 042
- US-A1- 2002 139 554
- US-B1- 6 317 053
- US-B1- 6 632 995
- Produktkatalog "Innovative Brandschutzsysteme 2005"
- Muster-Richtlinie über brandschutztechnische Anforderungen an Leitungsanlagen (MLAR)

## Beschreibung

Die vorliegende Erfindung betrifft ein Gehäuse, insbesondere für einen Elektroverteiler, gemäß dem Oberbegriff des Anspruchs 1 sowie ein Verfahren zum Schutz von elektrischen Einrichtungen in einem Gehäuse gemäß dem Oberbegriff des Anspruchs 13.

Elektroinstallations-Verteiler, kurz Elektroverteiler, sind in praktisch jedem elektrifizierten Gebäude vorhanden. In ihnen sind Sicherungs-, Schaltelemente und Elektroniken zur Verteilung von elektrischem Strom untergebrach10t. Eine zentrale Stromleitung führt Strom in den Elektroverteiler hinein. Aus dem Verteiler führen elektrische Leitungen entweder direkt zu verschiedenen elektrischen Verbrauchern, beispielsweise Beleuchtungskörpern, oder indirekt über Steckdosen oder Schalter zu solchen Verbrauchern.

Falls in dem Gebäude ein Brand auftritt, ist es notwendig, die Funktionsfähigkeit des Elektroverteilers so lange wie möglich zu erhalten. Dies ist vor allem dann wichtig, wenn es sich bei den Verbrauchern um sicherheitsrelevante Anwendungen handelt. Brandschutzverordnungen sehen beispielsweise vor, dass die Funktionsfähigkeit von Alarmanlagen, Rauchabzugsanlagen, Brandmeldeanlagen oder Sicherheitsbeleuchtungen noch mindestens 30 Minuten nach Auftreten eines Brandes gewährleistet sein muss. Für noch kritischere Anwendungen, beispielsweise für Feuerwehraufzüge, Bettenaufzüge in Krankenhäusern, Wasserdruckserhöhungsanlagen zur Löschwasserversorgung oder maschinelle Rauchschutz-Druckanlagen muss eine Funktionsfähigkeit noch für 90 Minuten nach Auftreten des Brandes gewährleistet werden. Man spricht dabei von sogenannten "Funktionserhalt" des Elektroverteilers.

Ein erster Ansatz zum Schutz der Elektroverteiler im Brandfall, der bereits in der Praxis verfolgt wird, besteht in einem Gehäuse, das den Elektroverteiler thermisch isoliert. Auf diese Weise soll versucht werden, den Elektroverteiler vor den hohen Temperaturen beim Brand zu schützen. Nachteilig daran ist jedoch, dass die elektrischen Komponenten des Verteilers Verlustwärme erzeugen und dass diese Verlustwärme auf Grund des thermisch isolierenden Gehäuses nicht mehr abgeführt werden kann. Folglich müssen im Gehäuse Öffnungen vorgesehen werden, um den Verteiler belüften zu können und im Normalbetrieb, d.h. ohne Auftreten eines Brandes, die Verlustwärme abführen zu können. Hierbei unterscheidet man zwischen natürlicher und technischer Belüftung.

Damit das Gehäuse den Verteiler im Brandfall tatsächlich thermisch isolieren kann, müssen die Öffnungen des Gehäuses im Brandverlauf automatisch verschlossen werden. Dazu werden derzeitig thermisch aktivierbare Dichtungsmaterialien verwendet, die ab einer bestimmten Temperatur aufflocken oder aufquellen und somit zu einem dämmenden Verschluss der Lüftungsöffnung führen.

Nachteilig an solchen thermisch aktivierbaren Dichtelementen ist, dass sie erst dann aktiviert werden, wenn ihre Temperatur durch den Brand bereits beträchtlich erhöht worden ist. Vor dieser relativ späten Aktivierung des Dichtelementes können durch den Brand erzeugte Gase, Rauch oder Feuchtigkeit in das Verteilergehäuse eindringen und dort die Funktionsfähigkeit des Elektroverteilers beeinträchtigen. Auf diese Weise kann es bereits vor Ablauf der oben geschilderten Sicherheitszeitspannen zu einem Ausfall des Elektroverteilers und damit zum Ausfall sicherheitsrelevanter Geräte kommen. Durch eine technische Belüftung kann diese negative Beeinflussung gravierend verstärkt werden. Das Dokument US2002/0139554 offenbart ein Gehäuse gemäss dem Oberbegriff des Anspruchs 1.

Aufgabe der vorliegenden Erfindung ist es, den Brandschutz für Elektroverteiler zu verbessern, insbesondere im Hinblick auf einen verlängerten Funktionserhalt des Elektroverteilers mit eingebauter technischer Belüftung im Fall eines Brandes.

Diese Aufgabe wird gelöst durch ein Gehäuse mit den Merkmalen des Anspruchs 1 bzw. durch ein Verfahren mit den Merkmalen des Anspruchs 13, sowie durch eine Verwendung eines Sensors als Brandschutzelement für das Gehäuse eines Elektroverteilers gemäß Anspruch 24. Vorteilhafte Weiterbildungen der Erfindung sind in den Unteransprüchen angegeben.

Vom Stand der Technik, bei dem die thermisch aktivierbare Dichtung üblicherweise an den Lüftungsöffnungen für natürliche Belüftung vorgesehen ist, unterscheidet sich die vorliegende Erfindung dadurch, dass zusätzlich ein ein (z.B. elektrisches) Messsignal abgebender Sensor, eine Steuereinheit und ein elektrisch aktivierbares Verschlusselement zum Verschließen von Lüftungsöffnungen und/oder zur Abschaltung der technischen Belüftung vorgesehen ist. Zusammen können diese Elemente ein effektives Brandschutzsystem für das Gehäuse darstellen. Sie erlauben es, das Gehäuse im Normalfall mit relativ großen Luftvolumenströmen zu be- und/oder entlüften, um eine effektive Abfuhr der Verlustwärme zu erzielen, und die Lüftungsöffnungen im Brandfall frühzeitig zu verkleinern, ganz zu schließen und/oder die technische Belüftung abzuschalten. Auf diese Weise kann das Eindringen von schädlichen Gasen oder Rußpartikeln sowie eine zu hohe Temperatur z.B. durch Brandgase im Gehäuse vermieden werden, die ansonsten zu einem frühzeitigen Funktionsausfall der im Gehäuse angeordneten elektrischen Betriebsmittel führen könnte. Auf diese Weise trägt das Gehäuse entscheidend dazu bei, die Funktion von sicherheitsrelevanten Einrichtungen im Gebäude für längere Zeit aufrecht zu erhalten.

Indem das elektrisch aktivierbare Verschlusselement und/oder die Abschaltung der technischen Belüftung zusätzlich zur thermisch aktivierbaren Dichtung vorgesehen ist, verfügt das erfindungsgemäße Gehäuse über mehrere Sicherheitseinrichtungen, die zu unterschiedlichen Zeitpunkten aktiviert werden können.

Vorzugsweise ist mindestens ein Sensor am oder im Gehäuse angeordnet. Er kann dann die Messwerte direkt innerhalb oder direkt am Gehäuse erfassen und auf diese Weise präzise bestimmen, welche Temperaturen oder Schadstoffwerte direkt an den im Gehäuse befindlichen elektrischen Betriebmittel herrschen. Es würde jedoch möglicherweise auch genügen, den Sensor nicht unmittelbar am Gehäuse, sondern in der näheren Umgebung des Gehäuses anzuordnen.

Zweckmäßig ist es, wenn mindestens ein Sensor ein Temperatursensor und/oder mindestens ein Sensor ein Luftfeuchtigkeitssensor ist, da sowohl eine zu hohe Temperatur, als auch eine zu hohe Luftfeuchtigkeit schädlich für das Funktionieren der im Gehäuse enthaltenen elektrischen Komponenten sein kann.

Zusätzlich oder alternativ könnte mindestens ein Sensor zum Messen der Konzentration eines Gases oder einer Kombination von Gasen oder von Partikeln, insbesondere Rußpartikeln, in Luft geeignet sein. Auch solche Gase, z.B. Rauchgase, oder Rußpartikel können die Funktionsfähigkeit der elektrischen Komponenten direkt beeinträchtigen. Mittels des erfindungsgemäßen System könnte die Luftzufuhr an die Komponenten rechtzeitig abgeschaltet werden, bevor die Schadstoffwerte zu kritisch werden für das Funktionieren der elektrischen Betriebsmittel.

In einer Variante der Erfindung ist mindestens ein Sensor zum Messen der Richtung und/oder der Geschwindigkeit einer Luftströmung vorgesehen. Anhand eines solchen Sensor ist es möglich, ausgehend vom Gehäuse die Richtung festzustellen, in der sich ein Brandherd befindet. Weil am Brandherd Sauerstoff verbrannt wird, wird sich eine zum Brandherd gerichtete Luftströmung entwickeln. Wird die Richtung erkannt, in der sich ein Brandherd befindet, können anschließend daran angepasste Maßnahmen zum Schutz des Gehäuses unternommen werden.

In einer anderen Ausführungsform der Erfindung ist das Verschlusselement ein Stellelement für eine Verschlussklappe. Mittels des Stellelementes kann die Verschlussklappe eine ihr zugeordnete Lüftungsöffnung teilweise oder vollständig verschließen, um die Luftzufuhr durch die Lüftungsöffnung zu drosseln oder zu unterbinden. Das Stellelement könnte dafür mit einem kleinen Elektromotor versehen sein.

Die vorliegende Erfindung lässt sich gleichermaßen bei einem Gehäuse mit einer natürlichen Belüftung, als auch bei einem Gehäuse mit einer technischen Belüftung einsetzen. Bei einer technischen Belüftung kann im Gehäuse und/oder in einer Lüftungsöffnung ein Lüfter vorgesehen sein. Dies hat den Vorteil, die pro Zeiteinheit durch die Lüftungsöffnung transportierte Luftmenge zu vergrößern und so im Normalbetrieb das Abführen der Verlustwärme zu verbessern.

Ist solch ein Lüfter vorgesehen, so kann das Verschlusselement ein Stellelement und/oder eine Abschaltung für den Lüfter sein. Befindet sich der Lüfter in der Lüftungsöffnung, so stellt er nach dem Abschalten ein Hindernis für die Luftströmung dar und verschließt die Lüftungsöffnung zumindest teilweise. Diese Verschlusswirkung kann dadurch verstärkt werden, dass ein Stellelement die Ausrichtung des Lüfters und/oder einzelner Rotorblätter des Lüfters relativ zur Lüftungsöffnung verändert. Denkbar wäre es beispielsweise, dass die Rotorblätter des Lüfters in eine Stellung gebracht werden, in der sie dicht aufeinander liegen, um auf diese Weise die Lüftungsöffnung weitgehend zu verschließen.

Bevorzugt ist es, wenn nicht nur ein Sensor vorgesehen ist, sondern wenn mehrere Sensoren gleichen und/oder unterschiedlichen Typs vorgesehen sind. Dies ermöglicht eine deutlich bessere Erkennung der auf Grund des Brandes drohenden Gefahren sowie einen rechtzeitigen Verschluss des Gehäuses, um Schaden von den elektrischen Betriebsmittel abzuwenden.

Erfindungsgemäss ist dem Verschlusselement eine Dichtung zugeordnet , um die Lüftungsöffnung in der Verschlussstellung des Verschlusselementes möglichst dicht zu verschließen. Damit wäre sichergestellt, dass die zuvor festgestellten Schadstoffwerte kaum noch erhöht würden. Insbesondere könnte zu diesem Zweck auch eine Dichtung aus einem thermisch aktivierbaren Material vorgesehen werden, um die Lüftungsöffnung noch dichter zu verschließen, wenn der Brand das Gehäuse erreicht.

In einer Variante der Erfindung kann als Verschlusselement eine im Gehäuse freisetzbare Menge eines Gases vorgesehen sein. Dieses Verschlusselement verschließt das Gehäuse nicht mechanisch, sondern "pneumatisch", indem innerhalb des Gehäuses ein Überdruck erzeugt wird, der das Eindringen von Luft und Schadstoffen von außen verhindert.

Zweckmäßig wäre es dabei, wenn das Gas ein nichtentflammbares Gas ist, insbesondere ein Edelgas.

Die erfindungsgemäße Aufgabe wird auch gelöst durch ein Verfahren mit den Merkmalen des Anspruchs 13. Wie vorstehend beschrieben, wirken der mindestens eine Sensor, die Steuereinheit und das elektrisch aktivierbare Verschlusselement dabei auf vorteilhafte Weise so zusammen, dass sie ein effektives Brandschutzsystem für das Gehäuse darstellen. Je nach der Art des gemessenen Wertes kann das Verschlusselement aktiviert und/oder die technische Belüftung abgeschaltet werden, wenn ein vorgegebener Schwellwert über- oder unterschritten wird. So kann das Brandschutzsystem beispielsweise dann ausgelöst werden, wenn eine vorgegebene Sauerstoffkonzentration in der Luft unterschritten wird, oder wenn vorgegebene Werte der Temperatur, der Luftfeuchtigkeit oder der Rußpartikelkonzentration in der Luft überschritten werden.

Bevorzugt wird ein dem Messwert entsprechendes elektrisches Messsignal vom Sensor an eine Auswerteeinheit übermittelt, die dann das Messsignal mit einem vorgegebenen Schwellwert vergleicht. Die Auswerteeinheit kann beispielsweise programmierbar sein, um eine besonders schnelle Auswertung des Messsignals zu ermöglichen.

Die Auswerteeinheit kann insbesondere auch ein Teil der Steuereinheit sein.

Zweckmäßig ist es, wenn der Schwellwert einstellbar ist. Dies ermöglicht eine einfache Anpassung des Brandschutzsystems an sich ändernde Umgebungsbedingungen oder an sich ändernde Anforderungen. Diese Anforderungen können sich beispielsweise auf Grund neuer Brandschutzverordnungen verändern, oder auch durch das Zuschalten von sicherheitsrelevanten Verbrauchern mit einer höheren Sicherheitsstufe.

In einer vorteilhaften Variante der Erfindung sind mehrere unterschiedliche Schwellwerte vorgesehen, und bei Über- oder Unterschreiten verschiedener Schwellwerte können das oder die Verschlusselemente auf unterschiedliche Weise aktiviert werden.

Im Folgenden werden bevorzugte Ausführungsbeispiele der Erfindung anhand einer Zeichnung näher erläutert. Im Einzelnen zeigen:
- Fig. 1: eine Ansicht eines ersten Ausführungsbeispiels der Erfindung, wobei das Innere des Gehäuses in der Mitte der Figur in Vorderansicht und an den beiden Seiten der Figur in seitlichem Vertikalschnitt dargestellt ist,
- Fig. 2: einen Vertikalschnitt durch das an einer Wand befestigte Gehäuse,
- Fig. 3: eine Vorderansicht des an einer Wand befestigten Gehäuses, und
- Fig. 4: einen vergrößerten Ausschnitt aus Fig. 1 an der dort mit IV bezeichneten Stelle.

Gleiche Komponenten sind in den Figuren durchgängig mit gleichen Bezugszeichen versehen worden.

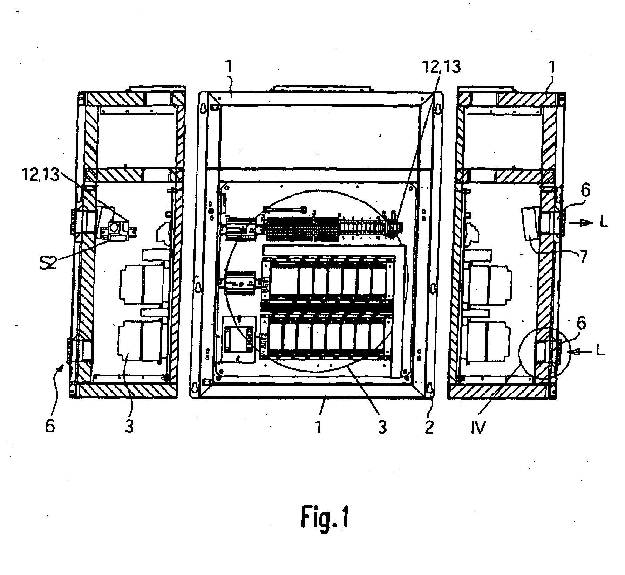

Fig. 1 zeigt ein Ausführungsbeispiel eines Elektroverteilers mit einem Gehäuse 1. Über Befestigungsmittel 2 ist das Gehäuse 1 an einer Wand oder einem Boden eines Gebäudes zu befestigen.

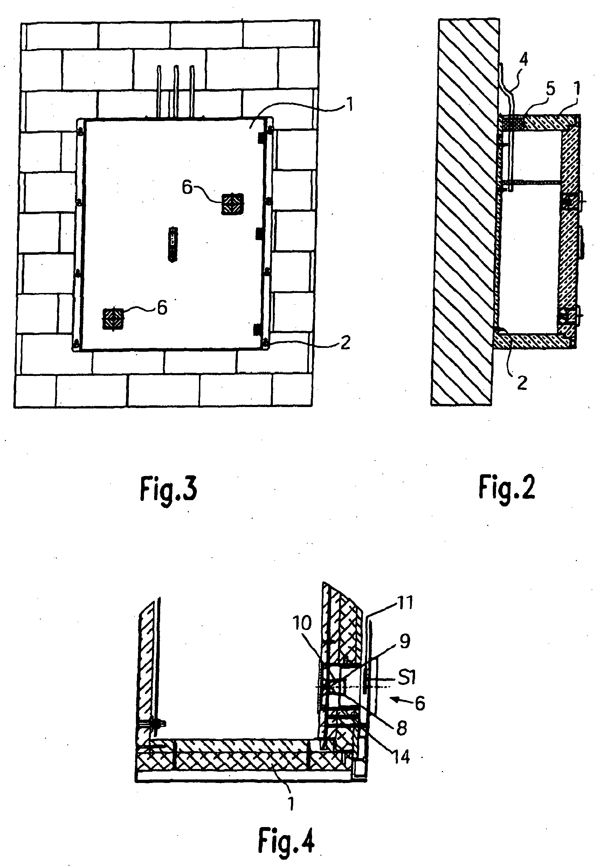

Im Gehäuse 1 befinden sich elektrische Komponenten 3, insbesondere Verteiler für elektrischen Strom. Eine elektrische Leitung 4 führt an einer Kabeleintrittsöffnung 5 in das Gehäuse 1 hinein bzw. aus dem Gehäuse 1 heraus (s. Fig. 2).

Das Gehäuse 1 verfügt über zwei Lüftungsöffnungen 6, die hier als Lüftungskanäle ausgebildet sind. Sie dienen dazu, das Gehäuse 1 zu be- und entlüften, um die elektrischen Betriebsmittel 3 zu kühlen und von den Betriebsmitteln 3 erzeugte Verlustwärme nach außen abzuführen. Um das Abführen der Verlustwärme zu verbessern, ist das Gehäuse 1 mit einer technisches Belüftung" ausgestattet. Insbesondere befindet sich dafür in einer der Lüftungsöffnungen 6 ein Lüfter 7. Der Lüfter 7 ist im Normalbetrieb so eingestellt, dass in der einen Lüftungsöffnung 6 eine in das Gehäuse hineingerichtete Luftströmung erzeugt wird, während an der anderen Lüftungsöffnung 6 eine aus dem Gehäuse 1 herausführende Luftströmung entsteht. Diese Luftströmungen sind in Fig. 1 durch entsprechende Pfeile L angedeutet.

An jeder der beiden Lüftungsöffnungen 6 befindet sich eine Verschlussklappe 8 (s. Fig. 4). Im Normalbetrieb des Elektroverteilers, d.h. ohne das Auftreten eines Bandes, befindet sich die Verschlussklappe 8 in geöffneter Stellung, in der sie die Lüftungsöffnung 6 frei lässt. So wird die größtmögliche Luftzufuhr in das Gehäuse 1 hinein und aus dem Gehäuse 1 heraus gewährleistet.

Die Verschlussklappe 8 ist über ein Schwenkgelenk 9 schwenkbar gegenüber dem Gehäuse 1 gelagert. Wird die Verschlussklappe 8 um das Schwenkgelenk 9 herum verschwenkt, verschließt sie in dieser Stellung die ihr zugeordnete Lüftungsöffnung 6 und dient auf diese Weise als Verschlusselement für das Gehäuse 1. Um einen luftdichten Verschluss der Lüftungsöffnung 6 zu gewährleisten, kann an der Verschlussklappe 8 und/oder am Rand der Lüftungsöffnung 6 noch ein Dichtungselement 10 vorgesehen sein.

Am Gehäuse 1 sind zwei Sensoren S angeordnet, die jeweils einen Messwert erfassen und ein entsprechendes (z.B. elektrisches oder optisches) Messsignal abgeben. Ein erster Sensor S1 ist auf der Außenseite des Gehäuses 1 montiert, während ein zweiter Sensor S2 auf der Innenseite des Gehäuses 1 montiert ist. Es kann sich bei diesen Sensoren S beispielsweise um Temperatur- oder Luftfeuchtigkeitssensoren handeln. Denkbar wären auch Sensoren zur Feststellung einer Partikelkonzentration in Luft, insbesondere der Konzentration von Rauchpartikeln.

Über Signalleitungen 11, gegebenenfalls aber auch kabellos, übermitteln die Sensoren S1, S2 ihre Messsignale an eine Auswerteeinheit 12. In der Auswerteeinheit 12 werden die von den Sensoren erhaltenen Messsignale mit vorgegebenen Schwellwerten verglichen. Das Ergebnis dieses Vergleiches wird von der Auswerteeinheit 12 an eine Steuereinheit 13 übermittelt. Um den Datenfluss zu vereinfachen, könnte die Auswerteeinheit ein binäres Signal an die Steuereinheit übermitteln. Der Wert dieses Signals würde dann von "0" auf "1" wechseln, sobald der Messwert den jeweiligen Schwellwert unter- bzw. überschreitet.

Wie Fig. 1 andeutet, können die Auswerteeinheit 12 und die Steuereinheit 13 in unmittelbarer Nachbarschaft der übrigen elektrischen Betriebsmittel 3 angeordnet sein. Sie könnten dann an einer gemeinsamen elektrischen Versorgung der elektrischen Komponenten 3 teilnehmen.

Über Steuerleitungen ist die Steuereinheit 13 mit Stellelementen verbunden. Die Stellelemente können die Verschlussklappen 9 und/oder die Lüfter 7 antreiben, verstellen und/oder abschalten. Insbesondere könnten sie eine Bewegung der Verschlussklappen 8 um deren Schwenkgelenke 9 bewirken. Hinsichtlich der Lüfter 7 könnten sie deren Drehrichtung, Rotationsgeschwindigkeit, Ausrichtung innerhalb der Lüftungsöffnungen 6 und/oder die Stellungen der einzelnen Rotorblätter beeinflussen. Auf diese Weise können die Stellelemente und/oder die Verschlussklappen 8 als Verschlusselemente für das erfindungsgemäße Gehäuse 1 dienen, da sie einen teilweisen oder vollständigen Verschluss der Lüftungsöffnungen 6 bewirken können.

Über die Steuereinheit 13 sind die Verschlusselemente 8 und/oder Lüfter 7 elektrisch beeinflußbar, wenn der Messwert einen vorgegebenen Schwellwert über- oder unterschreitet. Die elektrische Aktivierbarkeit der Verschlusselemente hat den Vorteil, dass das Gehäuse 1 rechtzeitig verschlossen werden kann, bevor die Funktionsfähigkeit der elektrischen Betriebsmittel 3 durch brandbedingte Immissionen in das Gehäuse 1 zu stark beeinträchtigt wird.

Im Folgenden wird das Verfahren zum Betrieb der gesamten Anordnung beschrieben. Im Normalbetrieb, d.h. ohne das Auftreten eines Brandes, sind die Lüftungsöffnungen 6 so weit wie möglich geöffnet. Die Verschlussklappen 8 sind vollständig geöffnet, und die Lüfter 7 sorgen für eine Lüftströmung L durch das Gehäuse 1, um die elektrischen Betriebsmittel 3 zu kühlen und ihre Verlustwärme abführen. Die Sensoren S erfassen kontinuierlich oder in vorbestimmten Intervallen Messwerte. Denkbar ist es beispielsweise, dass der Sensor S1 die Temperatur auf der Außenseite des Gehäuses 1 misst, während der Sensor S2 die Partikelkonzentration in der Luft im Inneren des Gehäuses 1 misst.

Die ermittelten Messwerte werden in Form von elektrischen Messsignalen über die Signalleitungen 11 an die Auswerteeinheit 12 übermittelt. Diese vergleicht die Messsignale mit jeweils vorgegebenen Schwellwerten. Stellt sie fest, dass ein bestimmter Schwellwert über- oder unterschritten wurde, beispielsweise anhand einer zu hohen Temperatur am Sensor S1 oder einer zu hohen (Ruß-) Partikelkonzentration am Sensor S2, wertet sie dies als Anzeichen für einen Brand und gibt ein entsprechendes Signal an die Steuereinheit 13 ab.

Die Steuereinheit 13 könnte dafür sorgen, dass ein optisches oder akustisches Warnsystem (nicht gezeigt) aktiviert wird, um die im Gebäude befindlichen Personen vor dem Brand zu warnen. Gleichzeitig steuert sie über die Steuerleitungen die hier als Stellelemente ausgebildeten Verschlusselemente 8 so an, dass die Lüftungsöffnungen 6 verschlossen werden. Der Verschluss der Lüftungsöffnungen 6 verhindert das Eindringen von weiterer, schädlicher Immissionen in das Gehäuse 1 hinein und verlängert so die Funktionsdauer der im Gehäuse 1 befindlichen elektrischen Betriebsmittel 3.

Wenn der Brand das Gehäuse 1 erreicht, bzw. wenn am Gehäuse 1 eine bestimmte Temperaturschwelle überschritten wird, wird auch die thermisch aktivierbare Dichtung 14 in den Lüftungsöffnungen 6 aktiviert. Sie schäumt auf und verschließt auf diese Weise die Lüftungsöffnungen 6.

Fig. 2 zeigt einen Vertikalschnitt durch das an einer Wand befestigte Gehäuses 1. Zu sehen ist, dass das Kabel 4 das Gehäuse 1 durch die Kabeleintrittsöffnung 5 verlässt.

Fig. 3 zeigt eine Vorderansicht des an einer Wand befestigten Gehäuses 1. Man kann erkennen, dass die beiden Lüftungsöffnungen 6 auf der Vorderseite des Gehäuses 1 diagonal versetzt zueinander angeordnet sind.

Fig. 4 schließlich zeigt einen vergrößerten Ausschnitt aus Fig. 1 an der dort mit IV bezeichneten Stelle.

Gleiche Komponenten sind in den Figuren durchgängig mit gleichen Bezugszeichen versehen worden.

Fig. 1 zeigt ein Ausführungsbeispiel eines Elektroverteilers mit einem Gehäuse 1. Über Befestigungsmittel 2 ist das Gehäuse 1 an einer Wand oder einem Boden eines Gebäudes zu befestigen.

Im Gehäuse 1 befinden sich elektrische Komponenten 3, insbesondere Verteiler für elektrischen Strom. Eine elektrische Leitung 4 führt an einer Kabeleintrittsöffnung 5 in das Gehäuse 1 hinein bzw. aus dem Gehäuse 1 heraus (s. Fig. 2).

Das Gehäuse 1 verfügt über zwei Lüftungsöffnungen 6, die hier als Lüftungskanäle ausgebildet sind. Sie dienen dazu, das Gehäuse 1 zu be- und entlüften, um die elektrischen Betriebsmittel 3 zu kühlen und von den Betriebsmitteln 3 erzeugte Verlustwärme nach außen abzuführen. Um das Abführen der Verlustwärme zu verbessern, ist das Gehäuse 1 mit einer "technischen Belüftung" ausgestattet. Insbesondere befindet sich dafür in einer der Lüftungsöffnungen 6 ein Lüfter 7. Der Lüfter 7 ist im Normalbetrieb so eingestellt, dass in der einen Lüftungsöffnung 6 eine in das Gehäuse hineingerichtete Luftströmung erzeugt wird, während an der anderen Lüftungsöffnung 6 eine aus dem Gehäuse 1 herausführende Luftströmung entsteht. Diese Luftströmungen sind in Fig. 1 durch entsprechende Pfeile L angedeutet.

An jeder der beiden Lüftungsöffnungen 6 befindet sich eine Verschlussklappe 8 (s. Fig. 4). Im Normalbetrieb des Elektroverteilers, d.h. ohne das Auftreten eines Bandes, befindet sich die Verschlussklappe 8 in geöffneter Stellung, in der sie die Lüftungsöffnung 6 frei lässt. So wird die größtmögliche Luftzufuhr in das Gehäuse 1 hinein und aus dem Gehäuse 1 heraus gewährleistet.

Die Verschlussklappe 8 ist über ein Schwenkgelenk 9 schwenkbar gegenüber dem Gehäuse 1 gelagert. Wird die Verschlussklappe 8 um das Schwenkgelenk 9 herum verschwenkt, verschließt sie in dieser Stellung die ihr zugeordnete Lüftungsöffnung 6 und dient auf diese Weise als Verschlusselement für das Gehäuse 1. Um einen luftdichten Verschluss der Lüftungsöffnung 6 zu gewährleisten, kann an der Verschlussklappe 8 und/ oder am Rand derLüftungsöffnung 6 noch ein Dichtungselement 10 vorgesehen sein.

Am Gehäuse 1 sind zwei Sensoren S angeordnet, die jeweils einen Messwert erfassen und ein entsprechendes (z.B. elektrisches oder optisches) Messsignal abgeben. Ein erster Sensor S1 ist auf der Außenseite des Gehäuses 1 montiert, während ein zweiter Sensor S2 auf der Innenseite des Gehäuses 1 montiert ist. Es kann sich bei diesen Sensoren S beispielsweise um Temperatur- oder Luftfeuchtigkeitssensoren handeln. Denkbar wären auch Sensoren zur Feststellung einer Partikelkonzentration in Luft, insbesondere der Konzentration von Rauchpartikeln.

Über Signalleitungen 11, gegebenenfalls aber auch kabellos, übermitteln die Sensoren S1, S2 ihre Messsignale an eine Auswerteeinheit 12. In der Auswerteeinheit 12 werden die von den Sensoren erhaltenen Messsignale mit vorgegebenen Schwellwerten verglichen. Das Ergebnis dieses Vergleiches wird von der Auswerteeinheit 12 an eine Steuereinheit 13 übermittelt. Um den Datenfluss zu vereinfachen, könnte die Auswerteeinheit ein binäres Signal an die Steuereinheit übermitteln. Der Wert dieses Signals würde dann von "0" auf "1" wechseln, sobald der Messwert den jeweiligen Schwellwert unter- bzw. überschreitet.

Wie Fig. 1 andeutet, können die Auswerteeinheit 12 und die Steuereinheit 13 in unmittelbarer Nachbarschaft der übrigen elektrischen Betriebsmittel 3 angeordnet sein. Sie könnten dann an einer gemeinsamen elektrischen Versorgung der elektrischen Komponenten 3 teilnehmen.

Über Steuerleitungen ist die Steuereinheit 13 mit Stellelementen verbunden. Die Stellelemente können die Verschlussklappen 9 und/oder die Lüfter 7 antreiben, verstellen und/oder abschalten. Insbesondere könnten sie eine Bewegung der Verschiussklappen 8 um deren Schwenkgelenke 9 bewirken. Hinsichtlich der Lüfter 7 könnten sie deren Drehrichtung, Rotationsgeschwindigkeit, Ausrichtung innerhalb der Lüftungsöffnungen 6 und/oder die Stellungen der einzelnen Rotorblätter beeinflussen. Auf diese Weise können die Stellelemente und/oder die Verschlussklappen 8 als Verschlusselemente für das erfindungsgemäße Gehäuse 1 dienen, da sie einen teilweisen oder vollständigen Verschluss der Lüftungsöffnungen 6 bewirken können.

Über die Steuereinheit 13 sind die Verschlusselemente 8 und/oder Lüfter 7 elektrisch beeinflußbar, wenn der Messwert einen vorgegebenen Schwellwert über- oder unterschreitet. Die elektrische Aktivierbarkeit der Verschlusselemente hat den Vorteil, dass das Gehäuse 1 rechtzeitig verschlossen werden kann, bevordie Funktionsfähigkeit der elektrischen Betriebsmittel 3 durch brandbedingte Immissionen in das Gehäuse 1 zu stark beeinträchtigt wird.

Im Folgenden wird das Verfahren zum Betrieb der gesamten Anordnung beschrieben. Im Normalbetrieb, d.h. ohne das Auftreten eines Brandes, sind die Lüftungsöffnungen 6 so weit wie möglich geöffnet. Die Verschlussklappen 8 sind vollständig geöffnet, und die Lüfter 7 sorgen für eine Lüftströmung L durch das Gehäuse 1, um die elektrischen Betriebsmittel 3 zu kühlen und ihre Verlustwärme abführen. Die Sensoren S erfassen kontinuierlich oder in vorbestimmten Intervallen Messwerte. Denkbar ist es beispielsweise, dass der SensorS1 die Temperaturauf der Außenseite des Gehäuses 1 misst, während der Sensor S2 die Partikelkonzentration in der Luft im Inneren des Gehäuses 1 misst.

Die ermittelten Messwerte werden in Form von elektrischen Messsignalen über die Signalleitungen 11 an die Auswerteeinheit 12 übermittelt. Diese vergleicht die Messsignale mit jeweils vorgegebenen Schwellwerten. Stelltsiefest, dass ein bestimmter Schwellwert überoder unterschritten wurde, beispielsweise anhand einer zu hohen Temperatur am Sensor S1 oder einer zu hohen (Ruß-) Partikelkonzentration am Sensor S2, wertet sie dies als Anzeichen für einen Brand und gibt ein entsprechendes Signal an die Steuereinheit 13 ab.

Die Steuereinheit 13 könnte dafür sorgen, dass ein optisches oder akustisches Wamsystem (nicht gezeigt) aktiviert wird, um die im Gebäude befindlichen Personen vor dem Brand zu warnen. Gleichzeitig steuert sie über die Steuerleitungen die hier als Stellelemente ausgebildeten Verschlusselemente 8 so an, dass die Lüftungsöffnungen 6 verschlossen werden. Der Verschluss der Lüftungsöffnungen 6 verhindert das Eindringen von weiterer, schädlicher Immissionen in das Gehäuse 1 hinein und verlängertsodie Funktionsdauer der im Gehäuse 1 befindlichen elektrischen Betriebsmittel 3.

Wenn der Brand das Gehäuse 1 erreicht, bzw. wenn am Gehäuse 1 eine bestimmteTemperaturschwelle überschritten wird, wird auch die thermisch aktivierbare Dichtung 14 in den Lüftungsöffnungen 6 aktiviert. Sie schäumt auf und verschließt auf diese Weise die Lüftungsöffnungen 6.

Fig. 2 zeigt einen Vertikalschnitt durch das an einer Wand befestigte Gehäuses 1. Zu sehen ist, dass das Kabel 4 das Gehäuse 1 durch die Kabeleintrittsöffnung 5 verlässt.

Fig. 3 zeigt eine Vorderansicht des an einer Wand befestigten Gehäuses 1. Man kann erkennen, dass die beiden Lüftungsöffnungen 6 auf der Vorderseite des Gehäuses 1 diagonal versetzt zueinander angeordnet sind.

Fig. 4 schließlich zeigteinen vergrößerten Ausschnitt aus Fig. 1 an der dort mit IV bezeichneten Stelle.

## Patentansprüche

1. Gehäuse (1), insbesondere für einen Elektroverteiler mit Funktionserhalt, mit mindestens einer Lüftungsöffnung (6) zum Be- und/oder Entlüften des Gehäuses (1) und mindestens einem Lüfter (7), wobei eine thermisch aktivierbare Dichtung (14) zum Abdichten des Gehäuses (1) im Brandfall vorgesehen ist, wobei ein ein Messsignal abgebender Sensor (S) zum Erfassen eines Messwertes vorgesehen ist, **dadurch gekennzeichnet, dass** mindestens ein elektrisch aktivierbares Verschlusselement (8) vorgesehen ist, sowie eine Steuereinheit (13), mittels derer das Verschlusselement (8) zum Verschließen der Lüftungsöffnung (6) und/oder zum Abschalten des Lüfters (7) aktivierbar ist, wenn der Messwert bei einem außerhalb des Gehäuses auftretenden Brand einen vorgegebenen Schwellwert über- oder unterschreitet und dass dem Verschlusselement die Dichtung (14) zugeordnet ist, um die Lüftungsöffnung (6) in der Verschlussstellung des Verschlusselementes dicht zu verschliessen.

2. Gehäuse nach Anspruch 1, **dadurch gekennzeichnet, dass** mindestens ein Sensor (S) am oder im Gehäuse (1) angeordnet ist.

3. Gehäuse nach einem der vorangehenden Ansprüche, **dadurch gekennzeichnet, dass** mindestens ein Sensor (S) ein Temperatursensor ist.

4. Gehäuse nach einem der vorangehenden Ansprüche, **dadurch gekennzeichnet, dass** mindestens ein Sensor (S) ein Luftfeuchtigkeitssensor ist.

5. Gehäuse nach einem der vorangehenden Ansprüche, **dadurch gekennzeichnet, dass** mindestens ein Sensor (S) zum Messen der Konzentration eines Gases oder einer Kombination von Gasen oder von Partikeln, insbesondere Rußpartikeln, in Luft geeignet ist.

6. Gehäuse nach einem der vorangehenden Ansprüche, **dadurch gekennzeichnet, dass** mindestens ein Sensor (S) zum Messen der Richtung und/oder der Geschwindigkeit einer Luftströmung geeignet ist.

7. Gehäuse nach einem der vorangehenden Ansprüche, **dadurch gekennzeichnet, dass** mehrere Sensoren (S) gleichen und/oder unterschiedlichen Typs vorgesehen sind.

8. Gehäuse nach einem der vorangehenden Ansprüche, **dadurch gekennzeichnet, dass** das Verschlusselement ein Stellelement für eine Verschlussklappe (8) ist.

9. Gehäuse nach einem der vorangehenden Ansprüche, **dadurch gekennzeichnet, dass** der Lüfter (7) im Gehäuse (1) und/oder in einer Lüftungsöffnung (6) vorgesehen ist.

10. Gehäuse nach einem der vorangehenden Ansprüche, **dadurch gekennzeichnet, dass** das Verschlusselement ein Stellelement und/oder eine Abschaltung für den Lüfter (7) ist.

11. Gehäuse nach einem der vorangehenden Ansprüche, **dadurch gekennzeichnet, dass** als Verschlusselement eine im Gehäuse (1) freisetzbare Menge eines Gases vorgesehen ist.

12. Gehäuse nach Anspruch 11, **dadurch gekennzeichnet, dass** das Gas ein Edelgas ist.

13. Verfahren zum Schutz von elektrischen Einrichtungen (3) in einem Gehäuse (1) nach einem der Ansprüche 1 bis 12 im Brandfall, wobei das Gehäuse (1) mit mindestens einer Lüftungsöffnung (6) zum Be- und/oder Entlüften des Gehäuses (1), mindestens einem Lüfter (7) und mindestens einer thermisch aktivierbaren Dichtung (14) zum Abdichten des Gehäuses (1) versehen ist, wobei am oder im Gehäuse (1) mittels mindestens eines Sensors (S) ein Messwert erfasst wird, **dadurch gekennzeichnet, dass** mittels einer Steuereinheit (13) ein Signal zum Verschließen der Lüftungsöffnung (6) und/oder zum Abschalten des Lüfters (7) an ein elektrisch aktivierbares Verschlusselement (8) gegeben wird, wenn der Messwert bei einem außerhalb des Gehäuses auftretenden Brand einen vorgegebenen Schwellwert über- oder unterschreitet.

14. Verfahren nach Anspruch 13, **dadurch gekennzeichnet, dass** ein dem Messwert entsprechendes elektrisches Messsignal vom Sensor (S) an eine Auswerteeinheit (12) übermittelt wird, die das Messsignal mit einem vorgegebenen Schwellwert vergleicht.

15. Verfahren nach einem der Ansprüche 13 oder 14, **dadurch gekennzeichnet, dass** die Auswerteeinheit (12) bei Über- oder Unterschreiten des Schwellwertes die Steuereinheit (13) dazu veranlasst, das Verschlusselement (8) zu aktivieren.

16. Verfahren nach einem der Ansprüche 13 bis 15, **dadurch gekennzeichnet, dass** der Schwellwert einstellbar ist.

17. Verfahren nach einem der Ansprüche 13 bis 16, **dadurch gekennzeichnet, dass** mehrere Schwellwerte vorgesehen sind, und dass bei Über- oder Unterschreiten verschiedener Schwellwerte das oder die Verschlusselemente (8) und/oder die Lüfter (7) auf unterschiedliche Weise aktiviert oder deaktiviert werden.

18. Verfahren nach einem der Ansprüche 13 bis 17, **dadurch gekennzeichnet, dass** ermittelt wird, in welcher Richtung relativ zum Gehäuse (1) sich ein Brandherd befindet.

19. Verfahren nach Anspruch 18, **dadurch gekennzeichnet, dass** die Richtung des Brandherdes anhand einer Messung der Richtung einer Luftströmung (L) und/oder anhand eines Vergleiches zweier Temperatursensoren ermittelt wird.

20. Verfahren nach einem der Ansprüche 18 oder 19, **dadurch gekennzeichnet, dass** eine Lüftungsöffnung (6) auf einer dem Brandherd zugewandten Seite des Gehäuses (1) verschlossen wird.

21. Verfahren nach einem der Ansprüche 18 bis 20, **dadurch gekennzeichnet, dass** eine Lüftungsöffnung (6) auf einer dem Brandherd abgewandten Seite des Gehäuses (1) bei Über- oder Unterschreiten eines ersten Schwellwertes zunächst erweitert und erst bei Über- oder Unterschreiten eines weiteren Schwellwertes verschlossen wird.

22. Verfahren nach einem der Ansprüche 13 bis 21, **dadurch gekennzeichnet, dass** bei Über- oder Unterschreiten eines Schwellwert im Gehäuse (1) eine Menge eines Gases freigesetzt wird, um innerhalb des Gehäuses (1) einen Überdruck zu erzeugen.

23. Verfahren nach Anspruch 22, **dadurch gekennzeichnet, dass** das Gas ein Edelgas ist.

24. Verwendung eines ein Messsignal abgebenden Sensors (S) in Verbindung mit einem elektrisch aktivierbaren Verschlusselementes (8) und/oder zur Abschaltung einer technischen Belüftung im Brandfall als Brandschutz für ein Gehäuse (1) gemäss Anspruch 1.

## Claims

1. Housing (1), in particular for an electrical distributor with functional integrity, comprising at least one vent (6) for aerating and/or deaerating the housing (1) and at least one fan (7), a thermally activatable seal (14) for sealing the housing (1) being provided in the event of a fire, a sensor (S) emitting a measuring signal to pick up a measured value being provided, **characterised in that** at least one electrically activatable closure element (8) is provided, and a control unit (13), by means of which the closure element (8) can be activated to close the vent (6) and/or to switch off the fan (7) when the measured value exceeds or falls below a predetermined threshold value in the event of a fire outside the housing, and **in that** the seal (14) is assigned to the closure element for sealingly closing the vent (6) in the closed position of the closure element.

2. Housing according to claim 1, **characterised in that** at least one sensor (S) is arranged on or in the housing (1).

3. Housing according to any of the preceding claims, **characterised in that** at least one sensor (S) is a temperature sensor.

4. Housing according to any of the preceding claims, **characterised in that** at least one sensor (S) is a humidity sensor.

5. Housing according to any of the preceding claims, **characterised in that** at least one sensor (S) is suitable for measuring the concentration of a gas or a combination of gases or particles, in particular soot particles, in air.

6. Housing according to any of the preceding claims, **characterised in that** at least one sensor (S) is suitable for measuring the direction and/or speed of an air flow.

7. Housing according to any of the preceding claims, **characterised in that** a plurality of sensors (S) of the same and/or different types are provided.

8. Housing according to any of the preceding claims, **characterised in that** the closure element is an actuator for a cover flap (8).

9. Housing according to any of the preceding claims, **characterised in that** the fan (7) is provided in the housing (1) and/or in a vent (6).

10. Housing according to any of the preceding claims, **characterised in that** the closure element is an actuator and/or a switch for the fan (7).

11. Housing according to any of the preceding claims, **characterised in that** a quantity of a gas that can be released in the housing (1) is provided as the closure element.

12. Housing according to claim 11, **characterised in that** the gas is an inert gas.

13. Method for protecting electrical equipment (3) in a housing (1) according to any of claims 1 to 12 in the event of a fire, the housing (1) being provided with at least one vent (6) for aerating and/or deaerating the housing (1), at least one fan (7) and at least one thermally activatable seal (14) for sealing the housing (1), a measured value being detected on or in the housing (1) by means of at least one sensor (S), **characterised in that**, by means of a control unit (13), a signal for closing the vent (6) and/or for switching off the fan (7) is sent to an electrically activatable closure element (8) when the measured value exceeds or falls below a predetermined threshold value in the event of a fire outside the housing.

14. Method according to claim 13, **characterised in that** an electrical measuring signal corresponding to the measured value is transmitted from the sensor (S) to an evaluation unit (12) which compares the measuring signal to a predetermined threshold value.

15. Method according to either claim 13 or claim 14, **characterised in that** the evaluation unit (12) causes the control unit (13) to activate the closure element (8) when the threshold value is exceeded or fallen below.

16. Method according to any of claims 13 to 15, **characterised in that** the threshold value can be adjusted.

17. Method according to any of claims 13 to 16, **characterised in that** a plurality of threshold values are provided, and **in that**, when different threshold values are exceeded or fallen below, the closure element(s) (8) and/or the fans (7) is/are activated or deactivated in different ways.

18. Method according to any of claims 13 to 17, **characterised in that** it is determined in which direction relative to the housing (1) a source of fire is located.

19. Method according to claim 18, **characterised in that** the direction of the source of fire is determined by measuring the direction of an air flow (L) and/or by comparing two temperature sensors.

20. Method according to either claim 18 or claim 19, **characterised in that** a vent (6) on a side of the housing (1) facing the source of fire is closed.

21. Method according to any of claims 18 to 20, **characterised in that** a vent (6) on a side of the housing (1) facing the source of fire is initially expanded when a first threshold value is exceeded or fallen below, and is closed once a further threshold value has been exceeded or fallen below.

22. Method according to any of claims 13 to 21, **characterised in that** when a threshold value is exceeded or fallen below in the housing (1), a quantity of a gas is released to generate overpressure inside the housing (1).

23. Method according to claim 22, **characterised in that** the gas is an inert gas.

24. Use of a sensor (S) sending a measuring signal in conjunction with an electrically activatable closure element (8) and/or for switching off an artificial ventilation in the event of a fire to protect a housing (1) according to claim 1 against fire.

## Revendications

1. Boîtier (1), plus particulièrement pour un distributeur électrique avec maintien de fonction, avec au moins une ouverture d'aération (6) pour l'aération et/ou la ventilation du boîtier (1) et au moins un ventilateur (7), un joint d'étanchéité (14) activable thermiquement étant prévu pour l'étanchéification du boîtier (1) en cas d'incendie, un capteur (S) émettant un signal de mesure étant prévu pour la mesure d'une valeur de mesure, **caractérisé en ce qu'**au moins un élément de fermeture (8) activable électriquement étant prévu, ainsi qu'une unité de commande (13), au moyen de laquelle l'élément de fermeture (8) peut être activée pour la fermeture de l'ouverture d'aération (6) et/ou pour l'arrêt du ventilateur (7), lorsque la valeur de mesure dépasse, dans le cas d'un incendie survenant à l'extérieur du boîtier, une valeur seuil prédéterminée ou passe en dessous de celle-ci et **en ce que** l'élément de fermeture est muni du joint d'étanchéité (14) pour sceller de manière étanche l'ouverture d'aération (6) dans la position de fermeture de l'élément de fermeture.

2. Boîtier selon la revendication 1, **caractérisé en ce qu'**au moins un capteur (S) est disposé sur ou dans le boîtier (1).

3. Boîtier selon l'une des revendications précédentes, **caractérisé en ce qu'**au moins un capteur (S) est un capteur de température.

4. Boîtier selon l'une des revendications précédentes, **caractérisé en ce qu'**au moins un capteur (S) est un capteur d'humidité de l'air.

5. Boîtier selon l'une des revendications précédentes, **caractérisé en ce qu'**au moins un capteur (S) est conçu pour mesurer la concentration d'un gaz ou d'une combinaison de gaz ou de particules, plus particulièrement de particules de suie, dans l'air.

6. Boîtier selon l'une des revendications précédentes, **caractérisé en ce qu'**au moins un capteur (S) est conçu pour mesurer la direction et/ou de la vitesse d'un flux d'air.

7. Boîtier selon l'une des revendications précédentes, **caractérisé en ce que** plusieurs capteurs (S) du même type et/ou de types différents sont prévus.

8. Boîtier selon l'une des revendications précédentes, **caractérisé en ce que** l'élément de fermeture est un élément de réglage pour un clapet de fermeture (8).

9. Boîtier selon l'une des revendications précédentes, **caractérisé en ce que** le ventilateur (7) est prévu dans le boîtier (1) et/ou dans une ouverture d'aération (6).

10. Boîtier selon l'une des revendications précédentes, **caractérisé en ce que** l'élément de fermeture est un élément de réglage et/ou un dispositif d'arrêt pour le ventilateur (7).

11. Boîtier selon l'une des revendications précédentes, **caractérisé en ce que**, en tant qu'élément de fermeture, une quantité d'un gaz pouvant être libérée dans le boîtier (1) est prévue.

12. Boîtier selon la revendication 11, **caractérisé en ce que** le gaz est un gaz noble.

13. Procédé de protection de dispositifs électriques (3) dans un boîtier (1) selon l'une des revendications 1 à 12 en cas d'incendie, le boîtier (1) étant muni d'au moins une ouverture d'aération (6) pour la ventilation et/ou l'aération du boîtier (1), d'au moins un ventilateur (7) et d'au moins un joint d'étanchéité (14) activable thermiquement pour l'étanchéification du boîtier (1), une valeur de mesure étant mesurée sur ou dans le boîtier (1) au moyen d'au moins un capteur (S), **caractérisé en ce que**, au moyen d'une unité de commande (13), un signal est émis, pour la fermeture de l'ouverture d'aération (6) et/ou pour l'arrêt du ventilateur (7), à un élément de fermeture (8) activable électriquement lorsque la valeur de mesure dépasse, dans le cas d'un incendie survenant à l'extérieur du boîtier, une valeur seuil prédéterminée ou passe en dessous de celle-ci.

14. Procédé selon la revendication 13, **caractérisé en ce qu'**un signal de mesure électrique correspondant à la valeur de mesure est transmis par le capteur (S) à une unité d'analyse (12) qui compare le signal de mesure à une valeur seuil prédéterm inée.

15. Procédé selon l'une des revendications 13 ou 14, **caractérisé en ce que** l'unité d'analyse (12) fait en sorte que l'unité de commande (13) active l'élément de fermeture (8) lors d'un dépassement ou d'un passage en dessous de la valeur seuil.

16. Procédé selon l'une des revendications 13 à 15, **caractérisé en ce que** la valeur seuil est réglable.

17. Procédé selon l'une des revendications 13 à 16, **caractérisé en ce que** plusieurs valeurs seuils sont prévues et **en ce que** lors d'un dépassement ou d'un passage en dessous de différentes valeurs seuils, le ou les éléments de fermeture (8) et/ou les ventilateurs (7) sont activés ou désactivés de différentes manières.

18. Procédé selon l'une des revendications 13 à 17, **caractérisé en ce qu'**il est déterminé dans quelle direction par rapport au boîtier (1) un foyer d'incendie se trouve.

19. Procédé selon la revendication 18, **caractérisé en ce que** la direction du foyer d'incendie est déterminée à l'aide d'une mesure de la direction d'un flux d'air (L) et/ou à l'aide d'une comparaison de deux capteurs de température.

20. Procédé selon l'une des revendications 18 ou 19, **caractérisé en ce qu'**une ouverture d'aération (6) est fermée sur un côté du boîtier (1) opposé au foyer d'incendie.

21. Procédé selon l'une des revendications 18 à 20, **caractérisé en ce qu'**une ouverture d'aération (6) s'élargit d'abord sur un côté du boîtier (1) opposé au foyer d'incendie lors du dépassement ou du passage en dessous d'une première valeur seuil puis n'est fermée que lors du dépassement ou du passage en dessous d'une autre valeur seuil.

22. Procédé selon l'une des revendications 13 à 21, **caractérisé en ce que**, lors du dépassement ou du passage en dessous d'une valeur seuil dans le boîtier (1), une quantité d'un gaz est libérée afin de générer une surpression à l'intérieur du boîtier (1).

23. Procédé selon la revendication 22, **caractérisé en ce que** le gaz est un gaz noble.

24. Utilisation d'un capteur (S) émettant un signal de mesure en lien avec un élément de fermeture (8) activable électriquement et/ou pour l'arrêt d'une ventilation technique dans le cas d'un incendie en tant que protection anti-incendie pour un boîtier (1) selon la revendication 1.
